# EUROPEAN PATENT SPECIFICATION

(11) **EP 4 642 652 B1**
(45) Date of publication and mention of the grant of the patent: **13.05.2026**
(21) Application number: 24772926.2
(22) Date of filing: 26.07.2024
(51) Int. Cl.: B42D 25/29, B42D 25/324, B42D 25/328, B42D 25/342, G02B 3/00, G02B 5/18

(54) **OPTICAL VARIABLE DEVICE**
OPTISCH VARIABLE VORRICHTUNG
DISPOSITIF VARIABLE OPTIQUE

(30) Priority: 07.03.2024 BG 11387224
(43) Date of publication of application: 05.11.2025
(73) Proprietor: Demax - Holograms AD, 1138 Sofia (BG)
(72) Inventor: MONOVSKI, Valentin Kostantinov, 1799 Sofia (BG); IVANOVSKYI, Andrii Albertovich, 1797 Sofia (BG); BALDZHIEV, Angel Georgiev, 6500 Svilengrad (BG)
(74) Representative: Pakidanska, Ivanka Slavcheva
(86) International application number: PCT/BG2024/050008
(87) International publication number: WO 2025/184713

(56) References cited:
- CN-A- 104 614 790
- DE-A1- 102018 010 078
- KR-A- 20090 066 826
- US-A1- 2004 179 266
- US-A1- 2013 099 474
- US-B2- 8 514 492

## Description

### FIELD OF INVENTION

The invention relates to an optical variable device forming a magnified three-dimensional black-and-white image of a micro-object with different optical effects such as three-dimensional images with full parallax and contrast change observed at different viewing angles, and finds application in the protection of documents and securities, authentication of goods as well as for decorative purposes.

### PRIOR ART

Security devices that reproduce an enlarged image and/or an image with optical effects are well suited for authentication and protection against unauthorized reproduction of documents and goods, as optical effects make imitation difficult.

It is known that when a matrix of micro-lenses and a matrix of micro-figures having different periods are superimposed, a magnified image of the micro-figures is observed. An optical variable device for protection against counterfeiting using this principle is disclosed in US 2010/0208036. The optical variable device includes a first layer on which a matrix of refractive lenses is formed, and a second layer spaced from the refractive lenses on which a matrix of micro-figures is formed. The two matrices are of different periods. The optical variable device reproduces a magnified three-dimensional image of the micro-figures including at least two planes. When tilting the security device a magnified three-dimensional black-and-white image with a full parallax motion effect is observed above or below the plane of the security device.

The production of such a multilayer device to reproduce a clear and contrast-enhanced three-dimensional black-and-white image is complex and expensive, and increases the cost of the security device. In addition, the presence of refractive lenses results in the relatively large thickness of this optical variable device, and complicates and limits its application.

The use of diffractive lenses instead of refractive ones in optical variable devices is known. It is preferable the diffractive lenses to have a triangular asymmetric relief since in this way the brightest and most contrasting image is obtained.

US 8,488,242 discloses an optical variable device comprising a planar base of a suitable material such as polyester, polystyrene, polyamide or cellulose acetate. On the one side of the base a diffraction structure in the form of a micro-lens matrix is formed, including a multitude of cells with micro-relief diffraction micro-lenses which can have an arbitrary profile, incl. an asymmetrical triangular profile. On the same side of the base is formed a matrix of micro-objects (micro-figures) having micro-relief, said matrix being integrated into the micro-lens matrix. The micro-lens matrix and the micro-object matrix are of different periods. When illuminated with directional white light at a certain viewing angle this optical variable device reproduces an enlarged black-and-white three-dimensional image of at least one micro-figure consisting of light and dark areas. When changing the viewing angle an inversion of image contrast is observed - dark areas become light and vice versa. The optical variable device is small in thickness and low in cost, but the formed magnified image is low in brightness because the micro-lenses distribute the light in all directions along the azimuth angles, and the micro-figures integrated into the diffraction structure block part of the incident light. This disrupts the structure of the diffractive micro-lenses and deteriorates their optical characteristics. When viewed in scattered light the micro-relief regions of the micro-figures form a blurring cloud visible in the zeroth order of diffraction which reduces the brightness of the reproduced magnified image and degrades its visual characteristics.

KR 2009 0066826 A discloses a security film with a two-dimensional array of diffraction lenses for reducing the film's thickness. The structure includes a lens layer which is a transparent substrate having a diffractive lens array portion in which diffractive lenses are arranged; an image layer positioned below the lens layer and having patterns or images formed thereon; and transparent functional layers located below the image layer and providing reflection and transmission of light, adhesion of the film to the document, and additional properties such as fluorescent, infrared, or magnetic features. The diffractive lenses have a circular shape with a diameter of 2-30 µm formed by concentric protrusions with a standard distance d between them and a triangular relief profile. The depth of the micro-relief of the diffractive lens is about 1 µm. The focal length of the lenses is 20-30 µm which means that the total thickness of thesecurity film is about 30 µm.The thickness of the image layer is selected so that the images are in the focus of the diffraction lenses. When illuminated with directional white light the security film reproduces the images formed on the image layer. When changing the viewing angle optical effects are observed, such as dynamic images, image enlargement or reduction and color change phenomenon due to diffraction in the upper front direction.

The disclosed security film is much thinner than those with refractive lenses but its thickness is still too great to be applied to goods and/or documents by hot stamping where the usual film thickness is less than 5 µm. Besides, the reproduced image is low in brightness because the light is evenly dispersed in all directions and is not concentrated in the viewing angles. In addition, the image layer is printed separately from the lens array so both the lens and image matrices cannot be precisely aligned due to technological reasons. As a result, the reproduced image is visually different along the length of the film and across production batches since the misalignment between the lens and image matrices is random. Further on, the lack of precise alignment between both images and lenses does not allow to achieve an optical effect of contrast change in the reproduced image when changing the viewing angle.

### DESCRIPTION OF INVENTION

The task of the present invention is to create an optical variable device with a small thickness and low cost which in white light forms a bright enlarged three-dimensional black-and-white image of at least one micro-object, and upon the changing of the elevation or azimuth angle of observation an optical effect of full parallax and inversion of the contrast of the image is observed.

The task is solved by providing an optical variable device comprising a planar base, on one side of which a micro-lens diffraction matrix with a period P₁ and a micro-object matrix with a period P₂ different from the period P₁ are formed. The micro-object matrix includes at least two micro-objects consisting of regions T₁ and T₂. The micro-lens diffraction matrix includes at least two cells, each with a respective center O, and each cell having a micro-relief diffraction micro-lens L with a center C consisting of alternating protrusions with asymmetrical triangular profile with a distance d between them decreasing radially from the center C to the periphery of the micro-lens. The center C of the micro-lens L is offset from the center O of the corresponding cell of the micro-lens diffraction matrix, so that the length of the vector *̅O̅C̅*̅ is equal to or greater than a quarter of the period P₁ of the micro-lens diffraction matrix. The micro-lens diffraction matrix is modulated by the micro-object matrix, so that the regions T₁ and T₂ of the micro-object matrix form in the micro-lens diffraction matrix corresponding regions M₁ and M₂, with region M₁ including part of the micro-lens L and region M₂ containing part of micro-lens L'. The micro-lens L' has a center C' and consists of alternating protrusions with an asymmetric triangular profile with a distance d' between them decreasing radially from the center C' to the periphery. The vector *̅O̅C̅'̅*̅ is located at an angle φ to the vector *̅O̅C̅*̅ and its length is greater than or equal to a quarter of the period P₁. The distances d and d' between two adjacent protrusions in the respective micro-lenses L and L' are in the range 0.4-100µm. The micro-lenses L and L' have opposite signs of the optical power and/or the values of d and d' at the boundary between two adjacent regions M₁ and M₂ differ at least twofold or the angle φ is between 45° and 180°. When observing the optical variable device at a certain angle in white light an enlarged three-dimensional black-and-white image of the micro-object with high brightness is reproduced, and when changing the elevation or azimuth angle of observation an optical effect of full parallax and inversion of the contrast of the image is observed - dark areas become light and vice versa.

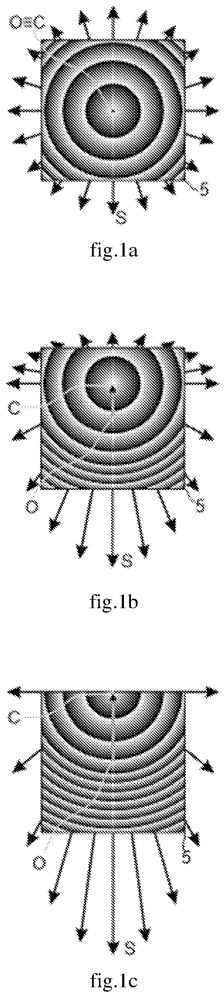

By shifting the corresponding centers C and C' of the micro-lenses L and L' relative to the center O of the corresponding cell of the micro-lens diffraction matrix, the azimuth viewing angles of the corresponding micro-lenses L and L' are limited and the light diffracts in a narrower range of angles, as a results of which the brightness of the formed magnified image in the displacement direction increases as illustrated in Figures 1a-1c. When the offset length of the corresponding center C and C' reaches a quarter of the period P₁ of the micro-object diffraction matrix, a visible increase in brightness of the formed magnified image is observed.

The distance d and d' between two adjacent protrusions of the respective micro-lenses L and L' depends on the modulus of the optical power of the corresponding micro-lens and the length of the offset of the center of the micro-lens relative to the center of the cell of the micro-lens diffraction matrix. The smaller the distance between the protrusions forming the relief of the diffraction microlens, the larger the deflection of the diffracted light at elevation angle from the zeroth order. That is, at a large value of d and d' the light will diffract at smaller elevation angles and closer to the zeroth order, and at a larger value the light will diffract at larger elevation angles and further from the zeroth order. When the values of d and d' at the boundary between two adjacent regions M₁ and M₂ differ at least twofold, under all observation conditions there will be a clearly visible contrast between the two regions and they will not appear equally bright. At certain elevation angles one area will appear bright and another dark, and when changing the viewing angle the first area will become dark and the other will become bright. The desired values for d and d' at the boundary between the regions M₁ and M₂ are achieved by appropriate choice of values for the modulus of the optical power of the lenses and the length of *̅O̅C̅*̅ and *̅O̅C̅*̅'̅*.*

The light diffracts in a direction perpendicular to the triangular relief of the micro-lenses L and L', therefore the maximum brightness of the formed magnified image is in the direction of the vectors *̅O̅C̅*̅ and *O̅C̅',* respectively. When the angle φ between *̅O̅C̅*̅ and *O̅C̅'* approaches 45°, a clearly visible contrast inversion of the magnified image is observed when the optical variable device is rotated by an angle φ in azimuth.

The sign of the optical power of the lens defines the slope of the profile. When the micro-lenses L and L' have opposite signs of the optical power, the corresponding protrusions in the micro-lenses L and L', which have a triangular profile are inclined in opposite directions, respectively, the light incident on them is deflected in opposite directions, whereby when changing the elevation or the azimuth angle of observation, depending on the sign of the optical power of the micro-lenses L and L', the value of the angle φ, and the ratio between the values of d and d' at the boundary between the regions M₁ and M₂, a change in contrast is observed.

Thus, for example, when the micro-lenses L and L' have opposite signs of the optical power, the angle φ is less than 45° and the values of d and d' at the boundary between two adjacent regions M₁ and M₂ differ by less than twofold, an inversion of the contrast of the magnified image is observed when the optical variable device is rotated by 180° in azimuth and/or when the elevation angle of observation changes and passes through the zeroth order of diffraction.

When the micro-lenses L and L' have the same sign of the optical power, and the angle φ is less than 45° and the values of d and d' at the boundary between two adjacent regions M₁ and M₂ differ more than twofold, an inversion of the contrast of the magnified image is observed when the elevation angle of observation changes without passing through the zeroth order of diffraction.

When the micro-lenses L and L' have opposite signs of the optical power, and the angle φ is less than 45°, and the values of d and d' at the boundary between two adjacent regions M₁ and M₂ differ more than twofold, an inversion of the contrast of the magnified image is observed when the optical variable device is rotated at 180° in azimuth and/or when the elevation angle of observation changes and passes through the zeroth order of diffraction.

When the micro-lenses L and L' have the same sign of the optical power, and the angle φ is between 45° and 180°, and the values of d and d' at the boundary between two adjacent regions M₁ and M₂ differ less than twofold, an inversion of the contrast of the magnified image is observed when the optical variable device is rotated in azimuth by an angle φ.

When the micro-lenses L and L' have the same sign of the optical power, and the angle φ is between 45° and 180°, and the ratio between d and d' differs more than twofold, an inversion of the contrast of the magnified image is observed when changing the azimuth and/or the elevation angle of observation and its passage through the zeroth order of diffraction.

It is preferable that the angle φ is close to 90° or 180° as these angles are easy to recognize and, accordingly, convenient for users.

The magnified image is formed outside the plane of the optical variable device and when the azimuth and/or the elevation angle of observation is changed full parallax movement is observed thus creating the illusion of a three-dimensional image.

Advantages of the optical variable device according to the invention are that, when observed at a certain angle in white light it forms a magnified three-dimensional black-and-white image of a micro-object with high brightness, and when changing the elevation or azimuth angle of observation an optical effect of full parallax and an inversion of the image contrast is observed. In addition, it is of small thickness, low cost, and can be easily produced with conventional equipment and technology. All this makes it very suitable for embedding in securities and documents for the purpose of protection, for authentication of goods, as well as for decorative purposes.

### DESCRIPTION OF THE FIGURES

Figure 1a) illustrates the diffraction of light S by a diffractive micro-lens with center C coinciding with the cell center O.
Figure 1b) illustrates the diffraction of light by a diffractive micro-lens with center C offset at a distance P₁/4 from the cell center O.
Figure 1c) illustrates the diffraction of light by a diffractive micro-lens with the center C offset at a distance P₁/2 from the cell center O.
Figure 2 illustrates an exemplary micro-object, in this case dark letters 'DH' on a light background.
Figure 3a) illustrates a micro-lens matrix cell containing a micro-lens L with a center C offset at a distance P₁/2 from the cell center O.
Figure 3b) is a cross section along A-A of Figure 3a).
Figure 4a) illustrates a micro-lens matrix cell containing a micro-lens L' with a center C' offset at a distance P₁/2 from the cell center O.
Figure 4b) is a cross section along A-A of Figure 4a).
Figure 5 is a schematic illustration of the micro-lens and micro-object matrices.
Figure 6 illustrates an optical variable device according to the invention and the observed optical effect.
Figure 7a) is a front view of an optical variable device (OVD) cell according to an exemplary embodiment of the invention.
Figure 7b) is a cross section along A-A of Figure 7).
Figure 8a) is a front view of an OVD cell in a variant embodiment of the invention.
Figure 8b) is a cross section along A-A of Figure 8a).
Figure 9a ) is a front view of an OVD cell in a variant embodiment of the invention.
Figure 9b) is a cross section along A-A of Figure 9a).
Figure 10 is a front view of an OVD cell according to a variant embodiment of the invention.
Figure 11a) is a front view of an OVD cell in a variant embodiment of the invention.

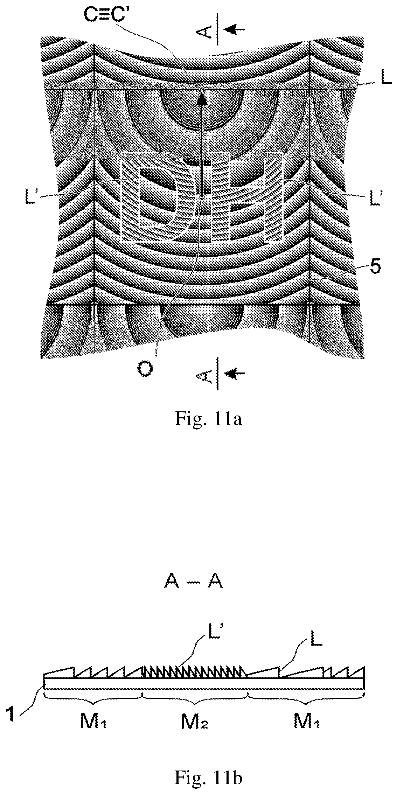

Figure 1b) is a cross section along A-A of Figure 11a).

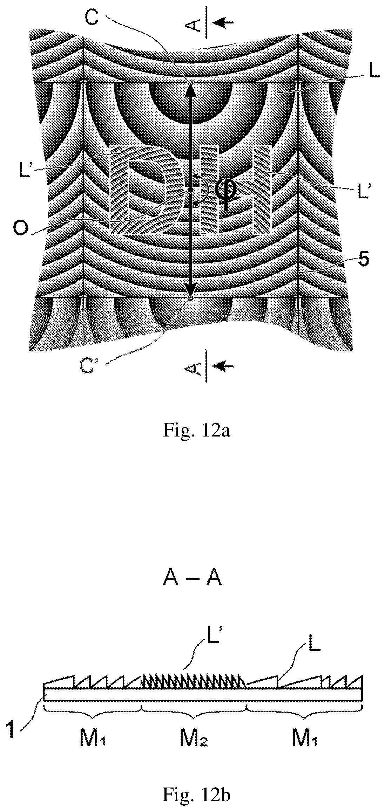

Figure 12a) is a front view of an OVD cell according to a variant embodiment of the invention.
Figure 12b) is a cross section along A-A of Figure 12a).

### VARIANT EMBODIMENTS OF THE INVENTION

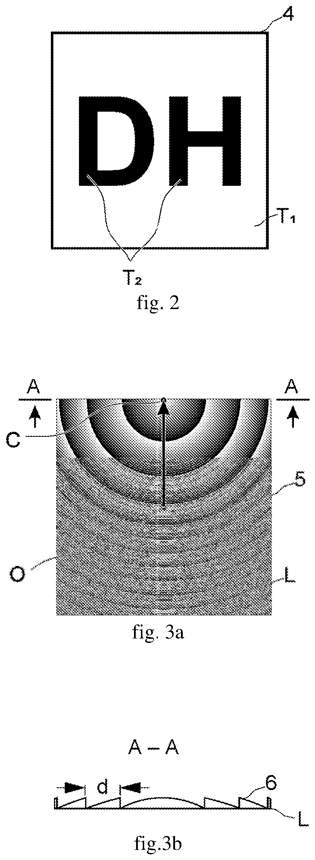

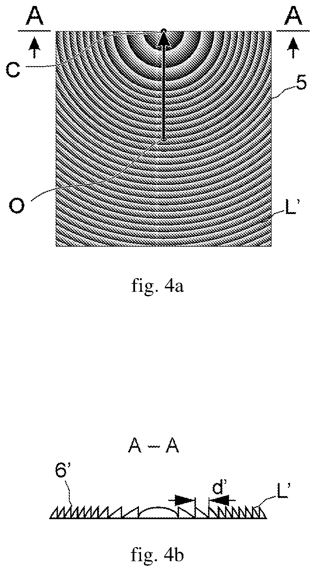

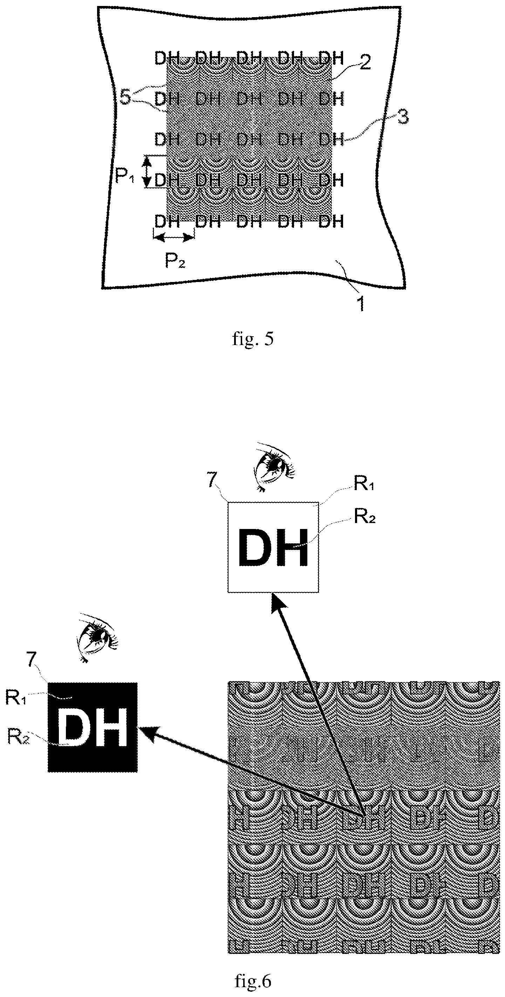

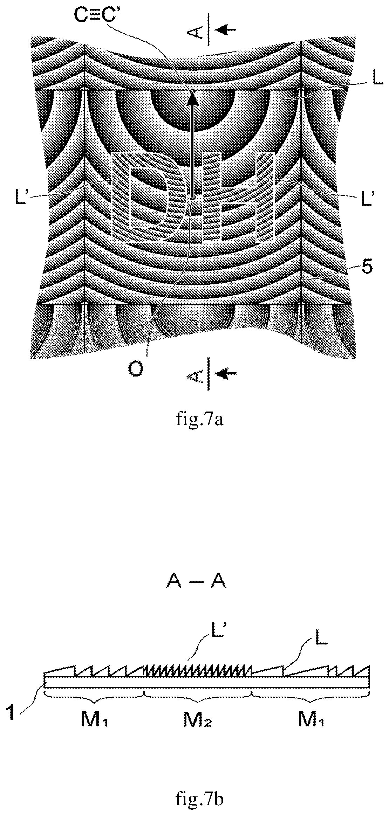

Figures 2-7b) illustrate an exemplary embodiment of an optical variable device according to the invention. It consists of a base 1 on one side of which is formed a micro-lens diffraction matrix 2 with a period P₁ including cells 5 with center O. In this exemplary embodiment, the micro-lens diffraction matrix 2 has a period P₁ = 200µm and includes 25 cells 5. In each cell 5 there is a diffraction micro-lens L with center C consisting of concentrically located alternating protrusions 6 with an asymmetric triangular profile with a distance d between them decreasing radially from the center C to the periphery. In this exemplary embodiment d is in the range 10-45µm, and the center C of the micro-lens L is offset relative to the center O of the respective cell 5 at a distance P₁/2 so that the length of the vector 100µm. The optical variable device also includes a micro-object matrix 3 which in this exemplary embodiment has a period P₂ = 209µm and contains 25 micro-objects 4 consisting of regions T₁ and regions T₂. In this particular case the micro-object 4 is an image of dark letters "DH" on a light background where the bodies of the letters are formed by the regions T₂ and the background is formed by the regions T₁. The micro-lens matrix 2 is modulated with the micro-object matrix 3 so that the regions T₁ and T₂ of the micro-object matrix 3 form in the micro-lens matrix 2 corresponding regions M₁ and M₂ containing respectively diffraction micro-lenses L and L'. The micro-lens L' has a center C' and consists of alternating protrusions 6' of an asymmetric triangular profile with a distance d' between them decreasing radially from the center C' to the periphery. In this exemplary embodiment the center C' of the micro-lens L' is offset relative to the center O of the corresponding cell 5 at a distance P₁/2 and an angle φ = 0 so that OC' coincides with *̅O̅C̅*̅. The values of d' are chosen in the range 1-15µm and at the boundary between two adjacent regions M₁ and M₂ differ at least twofold. The lenses L and L' have the same sign of optical power.

When viewing at a certain angle the optical variable device forms a magnified image 7 formed by areas R₁ and R₂ corresponding respectively to the regions T₁ and T₂ of the micro-object matrix 3. Since the diffraction micro-lenses L' in the regions M₂ forming the body of the letters, have greater optical power compared to the diffraction micro-lenses L in the areas M₁, forming the background of the micro-object 4, and the values of d and d' differ more than twofold at the boundary between two adjacent regions M₁ and M₂ the micro-lenses forming the body of the letters will diffract light at larger angles relative to zeroth order, and the micro-lenses forming the background - at smaller angles. Accordingly, when observing the optical variable device in a range of angles close to zeroth order, a brightly magnified image 7 of the micro-object 4 is observed where the bodies of the letters 'DH' are dark and the background is light. By changing the elevation angle of observation without passing through the zeroth order of diffraction, the contrast of the magnified image will invert and light letters on a dark background will be observed.

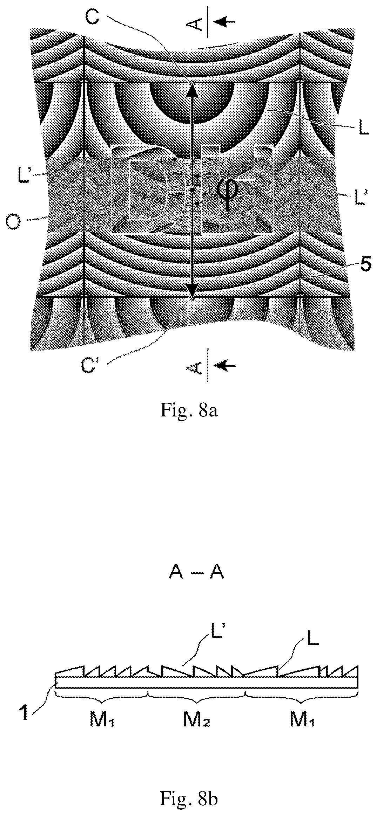

Example 2. Figures 8a) and 8b) illustrate another variant embodiment of an optical variable device according to the invention where the micro-lens and micro-object matrices 2 and 3 have the respectively same periods P₁ and P₂ and same number of cells as in the first embodiment and the diffraction micro-lenses L and L' have an asymmetric triangular profile of protrusion 6 and 6 ' respectively. In this variant embodiment the diffraction micro-lenses L and L' are equal in sign and modulus of the optical power. The values of d and d' are in the range 10-45µm, and the values of d and d' at the boundary between two adjacent regions M₁ and M₂ differ by less than twofold. The centers of the diffraction micro-lenses C and C ' are offset relative to the center O of the cell 5 in opposite directions at a distance of 100µm, and an angle φ between the vector *̅O̅C̅*̅ and the vector *̅O̅C̅'̅*̅ is 180°.

In this case, when observing the optical device in the range of azimuth angles measured from the horizontal, from 0° to 180° a magnified image 7 will be observed which will have dark letters on a light background, and from 180° to 360° the magnified image 7 will have light letters on a dark background. The same effect of contrast inversion of the magnified image 7 will also be observed when tilting the optical device in the vertical direction and changing the elevation angle of observation as it passes through the zeroth order of diffraction.

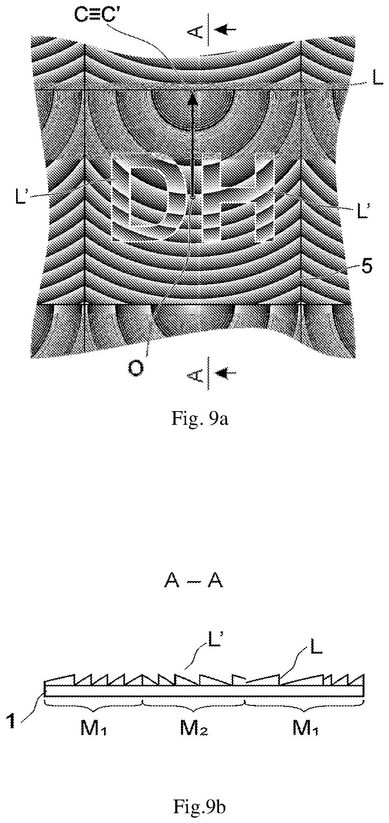

Example 3. Figures 9a) and 9b) illustrate another variant embodiment of an optical variable device according to the invention. The micro-lens and micro-object matrices 2 and 3 have the same periods P₁ and P₂ and the same number of cells as in the first example, and the diffraction micro-lenses L and L' also have an asymmetric triangular profile of the protrusions 6 and 6'. The diffractive micro-lenses L and L' have the same modulus but opposite in sign optical power. The values of d and d' are in the range of 10-45µm wherein the values of d and d' at the boundary between two adjacent regions M₁ and M₂ differ less than twofold. The centers of the micro-lenses are offset relative to the center O of the cell 5 in the same direction at a distance of 100µm, and the vector *̅O̅C̅*̅ coincides with the vector *O̅C̅'.* The observed effect of changing the contrast of the image is the same as in Example 2.

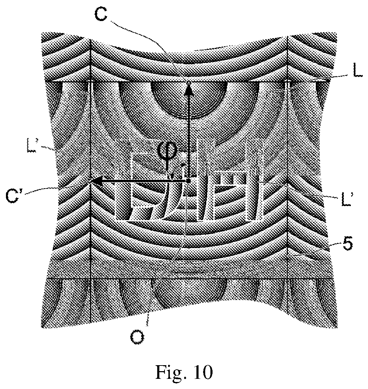

Example 4. Figure 10 shows another variant embodiment of an optical variable device according to the invention. The micro-lens and micro-object matrices 2 and 3 have the same periods P₁ and P₂ and the same number of cells as in the first embodiment, the diffraction micro-lenses L and L' also have an asymmetric triangular profile of the protrusions 6 and 6', and the values of d and d' are in the same range 10-45µm as in the first embodiment. Diffraction micro-lenses L and L' have the same sign and modulus of the optical power. The values of d and d' at the boundary between two adjacent regions M₁ and M₂ differ less than twofold. The centers of the diffraction micro-lenses are offset relative to the center O of the cell 5 at a distance of 100µm and the angle φ between the vector *̅O̅C̅*̅ and the vector *̅O̅C̅*̅' is equal to 90°. In this case an inversion of the contrast of the magnified image 7 will be observed when the optical variable device is rotated by 90° in azimuth clockwise.

Example 5. Figures 11a) and 11b) illustrate another variant embodiment of an optical variable device according to the invention. The micro-lens and micro-object matrices 2 and 3 have the same periods P₁ and P₂ and the same number of cells as in the first embodiment and the diffraction micro-lenses L and L' also have an asymmetric triangular profile of protrusions 6 and 6'. The diffraction micro-lenses L and L' have the same modulus but opposite optical power with the values of d in the range of 10-45µm, and of d' - in the range of 1-15µm, wherein d and d' differ at least twofold at the boundary between two adjacent regions M₁ and M₂. The centers of the diffraction micro-lenses L and L' are offset relative to the center O of the cell 5 in the same direction at a distance of 100µm, and the vector *̅O̅C̅*̅ coincides with the vector *O̅C̅'.* The observed effect of changing the contrast of the image will be the same as in Example 2.

Example 6. Figures 12a) and 12b) illustrate another variant embodiment of an optical variable device according to the invention. The micro-lens and micro-object matrices 2 and 3 have the same periods P₁ and P₂ and the same number of cells as in the first embodiment and the diffraction micro-lenses L and L' also have an asymmetric triangular profile of the protrusions 6 and 6'. The diffraction micro-lenses L and L' have the same sign and modulus of the optical power, and the centers C and C ' are offset from the center O of the cell 5 in opposite directions at a distance of 100µm, where the angle φ between the vectors OC and OC' is equal to 180°. The values of d are in the range of 10-45µm, the values of d' are in the range of 1-15µm, and the values of d and d' at the boundary between two adjacent regions M₁ and M₂ differ at least twofold. The observed effect of changing the contrast of the image will be the same as in Example 2.

The invention is not limited to the presented variant embodiments but is defined in the appended claims.

### INDUSTRIAL APPLICABILITY

The proposed optical variable device - all variants, is obtained by conventional technology - by digital synthesis and recording on a photosensitive material using lithographic technology. The resulting diffraction microrelief is copied onto a metal matrix by which the micro-relief is printed on a polymer material. The optical variable device is applied onto the object of protection in the form of a hot-stamping foil, laminate or sticker. Under white light illumination, a magnified three-dimensional black-and-white image of the micro-object of high brightness is observed, and when the optical variable device is tilted or rotated an inversion of the image contrast and an optical effect of full parallax are observed.

## Claims

1. An optical variable device comprising a planar base (1), on one side of which is formed a micro-lens diffraction matrix (2) with a period P₁ consisting of at least two cells (5) with a center O in each of which there is a diffraction micro-lens L with a center C consisting of alternating concentric protrusions (6) with an asymmetric triangular profile and distance d between them decreasing radially from the center C to the periphery, where said optical variable device also includes a micro-object matrix with a period P₂, said micro-object matrix containing at least two micro-objects comprising regions T₁ and T₂ where upon observation at a certain angle the optical variable device forms at least one magnified image of the micro object comprising light and dark areas R₁ and R₂,, and the micro-lens diffraction matrix (3) is modulated with the micro-object matrix (3) so that the regions T₁ and T₂ of the micro-object matrix form corresponding regions M₁ and M₂ in the micro-lens matrix containing respective diffractive micro-lenses L and L', and said diffractive micro-lens L' has a center C' and consists of alternating concentric protrusions (6') with an asymmetrical triangular profile and distance d' between them decreasing radially from the center C' to the periphery, **characterised in that** the period P₂ is different from the period P₁, and d and d' are in the range of 0.4-100µm, the center C of the diffraction micro-lens L is offset relative to the center O of the corresponding cell (5) and the length of the vector *̅O̅C̅*̅ is greater than or equal to P₁/4 and the length of the vector *̅O̅C̅*̅' is greater than or equal to P₁/4, the at least one magnified image is a three-dimensional black-and-white magnified image, and wherein the diffractive micro-lenses L and L' have opposite signs of the optical power and/or the values of d and d' at the boundary between two adjacent regions M₁ and M₂ differ by more than twofold or the angle φ is between 45° and 180°.

2. The optical variable device according to claim 1, wherein the diffractive micro-lenses L and L' have the same sign of the optical power, the angle φ < 45° and the values of d and d' at the boundary between two adjacent regions M₁ and M₂ differ more than twofold.

3. The optical variable device according to claim 1, wherein the diffractive micro-lenses L and L' have opposite signs of the optical power, the angle φ < 45° and the values of d and d' at the boundary between two adjacent regions M₁ and M₂ differ more than twofold.

4. The optical variable device according to claim 1, wherein the diffractive micro-lenses L and L' have the same sign of the optical power, the angle φ is between 45° and 180° and the values of d and d' at the boundary between two adjacent regions M₁ and M₂ differ less than twofold.

5. The optical variable device according to claim 1, wherein the diffractive micro-lenses L and L' have the same sign of the optical power, the angle φ is between 45° and 180° and the values of d and d' at the boundary between two adjacent regions M₁ and M₂ differs more than twofold.

6. The optical variable device according to claims 4-5, wherein the angle φ is close to 90°.

7. The optical variable device according to claims 4-5, wherein the angle φ is close to 180°.

8. The optical variable device according to claims 1-7, wherein the length of the vector *̅O̅C̅*̅ is greater than P₁ and the length of the vector *O̅C̅'* is greater than P₁.

## Patentansprüche

1. Ein variables optisches Element mit flacher Basis (1), die auf der einen Seite als eine diffraktive Mikrolinsen-Matrix (2) mit der Periode P₁ ausgebildet ist, bestehend aus mindestens zwei Zellen (5) mit Zentrum O, in denen je eine diffraktive Mikrolinse L mit Zentrum C vorhanden ist, die aus abwechselnden konzentrischen Vorsprüngen (6) mit einem asymmetrischen Dreiecksprofil und einem radial abnehmenden Abstand d zwischen ihnen vom Zentrum C zur Peripherie besteht, wobei das variable optische Element auch eine Mikroobjekt-Matrix (3) der Periode P₂ beinhaltet, die mindestens zwei Mikroobjekte hat, jedes mit Gebieten T₁ und T₂, wobei das variable optische Element bei Betrachtung unter einem bestimmten Winkel mindestens eine vergrößerte Abbildung des Mikroobjekts mit hellen und dunklen Feldern R1 und R2 erzeugt, und die diffraktive Mikrolinsen-Matrix (2) wird mit der Mikroobjekt-Matrix (3) so moduliert, dass die Gebiete T₁ und T₂ der Mikroobjekt-Matrix entsprechende Gebiete M₁ und M₂ in der diffraktiven Mikrolinsen-Matrix bilden, die entsprechenden diffraktiven Mikrolinsen L und L' enthalten, und dass die diffraktive Mikrolinse L' das Zentrum C' aufweist und aus abwechselnden konzentrischen Vorsprüngen (6') mit asymmetrischem Dreiecksprofil besteht, wobei der Abstand d' zwischen ihnen radial vom Zentrum C' zur Peripherie abnimmt, und **dadurch gekennzeichnet ist, dass** die Periode P₂ sich von der Periode P₁ unterscheidet und d und d' im Bereich von 0.4 bis 100 µm liegen, das Zentrum C der diffraktiven Mikrolinse L ist relativ zum Zentrum O der entsprechenden Zelle (5) verschoben und *̅O̅C̅*̅≥ P₁/4 und *̅O̅C̅*̅'≥P₁/4 sind, wobei mindestens eine der vergrößerten Abbildungen eine dreidimensionale schwarz-weiße Abbildung ist und die diffraktiven Mikrolinsen L und L' entgegengesetzte Vorzeichen der Brechkraft aufweisen und/oder die Werte von d und d' an der Grenze zwischen zwei benachbarten Gebieten M₁ und M₂ sich um mehr als das Zweifache unterscheiden oder der Winkel φ zwischen 45° und 180° liegt.

2. Ein optisches variables Element nach Anspruch 1, **dadurch gekennzeichnet, dass** die diffraktiven Mikrolinsen L und L' das gleiche Vorzeichen der Brechkraft haben, der Winkel φ <45° ist und die Werte von d und d' an der Grenze zwischen zwei benachbarten Gebieten M₁ und M₂ sich um mehr als das Zweifache unterscheiden

3. Ein optisches variables Element nach Anspruch 1, **dadurch gekennzeichnet, dass** die diffraktiven Mikrolinsen L und L' entgegengesetzte Vorzeichen der Brechkraft haben, der Winkel φ <45° ist und die Werte von d und d' an der Grenze zwischen zwei benachbarten Gebieten M₁ und M₂ sich um mehr als das Zweifache unterscheiden.

4. Ein optisches variables Element nach Anspruch 1, **dadurch gekennzeichnet, dass** die diffraktiven Mikrolinsen L und L' das gleiche Vorzeichen der Brechkraft haben, der Winkel φ zwischen 45° und 180° liegt und die Werte von d und d' an der Grenze zwischen zwei benachbarten Gebieten M₁ und M₂ sich um weniger als das Zweifache unterscheiden.

5. Ein optisches variables Element nach Anspruch 1, **dadurch gekennzeichnet, dass** die diffraktiven Mikrolinsen L und L' das gleiche Vorzeichen der Brechkraft haben, der Winkel φ zwischen 45° und 180° liegt und die Werte von d und d' an der Grenze zwischen zwei benachbarten Gebieten M₁ und M₂ sich um mehr als das Zweifache unterscheiden.

6. Ein optisches variables Element nach Ansprüchen 4-5, **dadurch gekennzeichnet, dass** der Winkel φ nahe 90° ist.

7. Ein optisches variables Element nach Ansprüchen 4-5, **dadurch gekennzeichnet, dass** der Winkel φ nahe 180° ist.

8. Ein optisches variables Element nach Ansprüchen 1-7, **dadurch gekennzeichnet, dass** die Länge des Vektors *̅O̅C̅*̅ größer als P₁ und die Länge des Vektors *̅O̅C̅*̅' größer als P1 ist.

## Revendications

1. Dispositif optique variable comprenant une base plane (1) sur laquelle est formée, sur l'une de ses faces, une matrice de diffraction à microlentilles (2) de période *P₁,* constituée d'au moins deux cellules (5) à centre *O*, chacune comportant une microlentille de diffraction L à centre C, constituée de saillies concentriques alternées (6) avec un profil triangulaire asymétrique et une distance d entre elles diminuant radialement du centre C vers la périphérie, ce dispositif optique variable incluant également une matrice de micro-objets de période *P₂,* cette dernière contenant au moins deux micro-objets comportant des régions *T₁* et *T₂,* ce dispositif optique variable formant, sous un certain angle d'observation, au moins une image agrandie du micro-objet composée de zones claires et sombres *R₁* et *R₂,* la matrice de diffraction à microlentilles (2) étant modulée par la matrice de micro-objets (3) de sorte que les régions *T₁* et *T₂* de la matrice de micro-objets forment les régions correspondantes *M₁* et *M₂* au niveau de la matrice à microlentilles, contenant les microlentilles diffractives respectives *L et L',* la microlentille diffractive *L'* possédant un centre C' et comprenant des saillies concentriques alternées (6') avec un profil triangulaire asymétrique et une distance d' entre elles diminuant radialement du centre C' vers la périphérie, **caractérisé en ce que** la période *P₂* est différente de la période *P₁, d* et *d'* sont compris entre 0,4 et 100 µm, le centre C de la microlentille diffractive L est décalé par rapport au centre *O* de la cellule correspondante (5), et *̅O̅C̅*̅≥ P₁/4 et *̅O̅C̅*̅'≥P₁/4, l'image agrandie concernée, au moins une, est tridimensionnelle, noir et blanc, et **caractérisé en ce que** les microlentilles diffractives *L* et *L'* présentent des signes opposés de puissance optique et/ou les valeurs de *d* et *d'* à la frontière de deux régions adjacentes *M₁* et *M₂* diffèrent au moins deux fois ou l'angle *φ* se situe entre 45° et 180°.

2. Dispositif optique variable selon la revendication (1), **caractérisé en ce que** les microlentilles diffractives *L* et *L'* présentent le même signe de puissance optique, l'angle φ < 45° et les valeurs de *d* et *d'* à la frontière de deux régions adjacentes *M₁* et *M₂* diffèrent plus de deux fois.

3. Dispositif optique variable selon la revendication (1), **caractérisé en ce que** les microlentilles diffractives L et L' présentent des signes opposés de puissance optique, l'angle φ < 45° et les valeurs *d* et *d'* à la frontière de deux régions adjacentes *M₁* et *M₂* diffèrent plus de deux fois.

4. Dispositif optique variable selon la revendication (1), **caractérisé en ce que** les microlentilles diffractives *L* et *L'* présentent le même signe de puissance optique, l'angle *φ* se situe entre 45° et 180° et les valeurs de *d* et *d' à* la frontière de deux régions adjacentes *M₁* et *M₂* diffèrent moins de deux fois.

5. Dispositif optique variable selon la revendication (1), **caractérisé en ce que** les microlentilles diffractives *L* et *L'* présentent le même signe de puissance optique, l'angle *φ* se situe entre 45° et 180° et les valeurs de *d* et *d'* à la frontière de deux régions adjacentes *M₁* et *M₂* diffèrent plus de deux fois.

6. Dispositif optique variable selon les revendications 4 à 5, **caractérisé en ce que** l'angle *φ* est proche de 90°.

7. Dispositif optique variable selon les revendications 4 à 5, **caractérisé en ce que** l'angle *φ* est proche de 180°.

8. Dispositif optique variable selon les revendications 1 à 7, **caractérisé en ce que** la longueur du vecteur *̅O̅C̅*̅ est supérieure à P₁ et *O̅C̅'* est supérieure à P₁.
